# FASCICULE DE BREVET EUROPEEN

(11) **EP 3 813 552 B1**
(45) Date de publication et mention de la délivrance du brevet: **31.07.2024**
(21) Numéro de dépôt: 19745668.4
(22) Date de dépôt: 04.06.2019
(51) Int. Cl.: A23L 3/375, A23L 2/54, A23L 3/3409, A61K 8/04, A23C 9/152, A23F 5/24

(54) **PROCEDE D'OBTENTION D'UN PRODUIT SOUS FORME DE GRANULES, PARTICULES OU BILLES SURGELEES RICHES EN GAZ DISSOUS ET EQUIPEMENT ASSOCIE**
VERFAHREN ZUR HERSTELLUNG EINES PRODUKTS IN FORM VON GAS-ENTHALTENDEM GRANULAT, PARTIKELN, ODER KUGELN, UND ZUGEHÖRIGE ANLAGE
PROCESS FOR OBTAINING A PRODUCT IN THE FORM OF GAZEIFIED GRANULES, PARTICLES OR BEADS, AND CORRESPONDING INSTALLATION

(30) Priorité: 04.06.2018 FR 1854814
(43) Date de publication de la demande: 05.05.2021
(73) Titulaire: Genialis, 18250 Henrichemont (FR)
(72) Inventeur: GILLET, Guillaume, 41300 SALBRIS (FR)
(74) Mandataire: Fidal Innovation
(86) Numéro de dépôt international: PCT/FR2019/051307
(87) Numéro de publication internationale: WO 2019/234341

(56) Documents cités:
- EP-A1- 1 152 183
- WO-A2-2008/043909
- ES-A1- 2 194 558
- US-A- 5 126 156
- US-A1- 2017 049 126
- US-B1- 6 223 542

## Description

### DOMAINE TECHNIQUE DE L'INVENTION

L'invention concerne le domaine de la cryogénie sous pression de produits fluides.

L'invention concerne plus particulièrement un procédé et équipement associé pour l'obtention d'un produit sous forme de granules, particules ou billes surgelées riches en gaz dissous, à partir d'une matrice liquide, semi-liquide ou pâteuse, comprenant les étapes consistant à gazéifier la matrice par incorporation d'un gaz, à dispenser la matrice sous forme de gouttes et à cryogéniser les gouttes de matrice par immersion dans un fluide cryogénique.

L'invention est destinée notamment mais non exclusivement à l'obtention d'un produit sous forme de granules, particules ou billes à partir d'une matrice alimentaire (aliment ou boisson) ou cosmétique (lotion, lait ou crème fluide par exemple) se présentant dans un état fluide (i.e. liquide, semi-liquide ou pâteux).

### ETAT DE LA TECHNIQUE

Parmi les solutions proposées pour la réalisation de billes ou de granulés de produits cryogénisés, il est connu de la demande WO2008/043909 un procédé mettant en oeuvre deux étapes successives consistant à dissoudre du gaz dans une matrice liquide plus ou moins visqueuse par mise en contact de ladite matrice avec une atmosphère dont la pression partielle en gaz est supérieure à 2 bars puis à cryogéniser, dans les mêmes conditions de pression que lors de la première étape, la matrice contenant le gaz dissous par goutte à goutte dans un fluide cryogénique à l'état liquide.

L'avantage de ce procédé réside principalement dans les propriétés apportées au produit final, à la fois lors de son stockage et lors de sa remise en oeuvre. Parmi les propriétés apportées, citons par exemple le développement d'une protection vis-à-vis de l'oxydation pendant le stockage d'une part et la formation de mousse lors du réchauffage d'autre part. Le procédé est toutefois très délicat à mettre en oeuvre car il nécessite des équipements très particuliers, capables de résister à la fois à des conditions de température et de pression extrêmes tout en assurant la sécurité des personnes.

D'autres solutions ont été proposées par le passé ou encore aujourd'hui pour la réalisation de billes ou de granulés de produits cryogénisés. La demande de brevet US2017049126 illustre les principes généraux de ces procédés dans lesquels les billes ou granulés sont formés par écoulement depuis une douche, puis chutent dans un fluide cryogénique avant d'en être extrait par un tamis ou un filtre. Le fluide cryogénique peut être mis en mouvement par écoulement gravitaire ou à l'aide d'une pompe par exemple.

Les procédés de ce type présentent cependant des inconvénients. En particulier, ils sont toujours ouverts sur leur environnement de manière à permettre la récupération en continu des produits issus du traitement. Aussi, une extraction de gaz est-elle nécessaire de manière à assurer la protection des personnes travaillant dans l'environnement des machines vis-à-vis du risque d'anoxie. Ils ne permettent pas par ailleurs d'obtenir des produits ayant les propriétés observées avec le procédé décrit dans la demande de brevet WO2008043909 susmentionnée (anti-oxydation et formation de mousse).

L'invention vise à remédier à ces problèmes en proposant un procédé et un équipement associé pour l'obtention d'un produit sous forme de granules, particules ou billes surgelées contenant du gaz dissous en grande quantité, de mise en oeuvre simple et sécuritaire pour les personnes.

Le procédé selon l'invention et l'équipement mis en oeuvre visent également à préserver l'intégrité de la matrice de départ, notamment au niveau de ses propriétés physico-chimiques et organoleptiques lorsqu'il s'agit d'une matrice alimentaire.

### OBJET DE L'INVENTION

A cet effet, et selon un premier aspect, l'invention propose un procédé d'obtention d'un produit sous forme de granules, particules ou billes surgelées riches en gaz dissous, à partir d'une matrice liquide, semi-liquide ou pâteuse, comprenant les étapes consistant à gazéifier la matrice par incorporation d'un gaz, à dispenser la matrice sous forme de gouttes et à cryogéniser les gouttes de matrice par immersion dans un fluide cryogénique, le procédé étant remarquable en ce que l'étape de gazéification de la matrice consiste à dissoudre, en grande quantité, le gaz généré par l'évaporation du fluide cryogénique dans les gouttes de matrice par accroissement du nombre de molécules de gaz dans une zone de haute densité de gaz, dite zone de haute densité moléculaire, située au-dessus de la surface du fluide cryogénique et sur la trajectoire des gouttes de matrice avant leur immersion dans le fluide, ladite zone de haute densité moléculaire étant créée en réalisant la gazéification et la cryogénisation des gouttes gazéifiées au sein d'une enceinte fermée pourvue d'un évent arrangé pour permettre une évacuation du gaz généré par l'évaporation du fluide cryogénique par convection naturelle et maintenir l'intérieur de l'enceinte à une pression supérieure ou égale à la pression atmosphérique.

Par dissous en grande quantité, on entend que le produit est a minima saturé en ledit gaz, voir préférentiellement qu'il est sursaturé en ledit gaz, c'est-à-dire que la quantité dissoute correspond à celle obtenue par équilibre avec une pression partielle du gaz supérieure à la pression atmosphérique. La concentration en gaz dissous est alors a minima égale à la concentration de saturation dudit gaz, donnée par sa solubilité et elle est préférentiellement supérieure à cette concentration de saturation dans la matrice.

Dans la suite, par commodité de langage, on parlera de densité moléculaire de gaz en lieu et place de l'expression « nombre de molécules de gaz ».

Ainsi, grâce à l'application d'un gradient de densité moléculaire directement sur les gouttes de matrice, le procédé selon l'invention permet de préparer des produits cryogénisés contenant du gaz dissous en une seule étape et sans que les équipements nécessaires ne soient de réalisation complexe. Il permet en outre de dissoudre de manière importante du gaz dans une matrice fluide, par sursaturation, sans pour autant qu'il y ait un accroissement de la pression mesurée à l'intérieur de l'équipement associé. Il permet de préserver l'intégrité de la matrice de départ et ses propriétés, notamment au niveau de ses propriétés physico-chimiques et organoleptiques lorsqu'il s'agit d'une matrice alimentaire.

Selon l'invention, l' 'étape de gazéification est réalisée à une pression supérieure ou égale à la pression atmosphérique, préférentiellement égale à la pression atmosphérique.

Avantageusement, l'étape de cryogénisation des gouttes gazéifiées pour former des granules, particules ou billes sursaturées est réalisée par immersion dans un bain de fluide cryogénique dans la même enceinte que celle où est réalisée la gazéification.

Avantageusement, le procédé comporte une étape de collecte continue ou semi-continue des granules, particules ou billes sursaturées. L'extraction peut également se faire en discontinu, en n'extrayant les produits surgelés qu'une fois le gouttage terminé.

Le procédé selon l'invention peut être appliqué aux produits liquides, tels que des boissons alimentaires, des laits cosmétiques ou encore des suspensions de matériels vivants (bactéries, levures, virus, cellules souches, etc.), aux produits fluides, tels que des crèmes fluides pour le visage, des crèmes dessert, des purées de fruits, ainsi qu'au produits pâteux, tels que des appareils à gâteaux ou des préparations d'algues fraiches.

Les propriétés apportées aux produits sont nombreuses et peuvent différer en fonction de la nature de ceux-ci. Par exemple, l'inertage induit par la dissolution d'un gaz inerte, tel que l'azote par exemple, permet une résistance accrue à l'oxydation des produits, dont la conservation se trouve alors prolongée. Cet aspect est particulièrement intéressant pour la conservation de certains principes actifs hautement oxydables. Un autre exemple concerne la formation de mousse lors de la décongélation des billes, phénomène particulièrement intéressant pour des boisons telles que le café ou le chocolat par exemple. La forme et les dimensions des billes, ajouté à la présence de gaz dissous, permet également de faciliter l'emploi des produits par d'autres technologie. Par exemple, la lyophilisation de produits cryogénisés et contenant du gaz est plus rapide qu'une lyophilisation à partir du produit brut. Les produits sont également mieux préservés au niveau de leur intégrité et de leurs propriétés.

L'invention concerne également un équipement pour l'obtention d'un produit sous forme de granules, particules ou billes surgelées riches en gaz dissous, à partir d'une matrice liquide, semi-liquide ou pâteuse, comprenant des moyens pour dispenser la matrice sous forme de gouttes et un réceptacle de cryogénisation contenant un fluide cryogénique dans lequel les gouttes de matrice sont reçues pour y être cryogénisées et transformées en granules, particules ou billes sursaturées, caractérisé en ce que l'équipement comporte une zone de haute densité moléculaire de gaz située entre les moyens dispensant la matrice sous forme de gouttes et le réceptacle de cryogénisation, la zone de haute densité moléculaire de gaz et le réceptacle de cryogénisation étant situés à l'intérieur d'une enceinte fermée pourvue d'au moins un évent d'évacuation apte à évacuer le gaz généré par l'évaporation du fluide cryogénique par convection naturelle.

L'évent est dimensionné en cohérence avec la quantité de gaz pouvant être générée dans l'enceinte et, donc, avec le débit d'écoulement de la matrice que l'on souhaite traiter, de telle sorte que le débit de gaz à extraire peut s'écouler par l'évent sans que l'enceinte ne monte en pression.

Ainsi, l'évent d'évacuation du gaz est arrangé pour maintenir l'intérieur de l'enceinte à une pression supérieure ou égale à la pression atmosphérique. Pour certaines applications particulières nécessitant de très grande quantité de gaz dissous dans la matrice, il peut être prévu de dimensionner l'évent de telle sorte que la pression dans l'enceinte soit supérieure à la pression atmosphérique, pour qu'ainsi la densité moléculaire soit encore plus élevée au niveau de la zone de haute densité moléculaire.

Avantageusement, le réceptacle de cryogénisation est situé sous les moyens dispensant la matrice sous forme de gouttes de manière à recevoir les gouttes de matrice par écoulement gravitaire depuis les moyens dispensant la matrice sous forme de gouttes jusque dans le réceptacle de cryogénisation.

Avantageusement, les moyens dispensant la matrice sous forme de gouttes sont situés à l'intérieur de l'enceinte.

Avantageusement, l'équipement comporte un dispositif de collecte, en sortie du réceptacle de cryogénisation, des granules, particules ou billes.

### BREVE DESCRIPTION DES FIGURES

D'autres objets et avantages de l'invention apparaîtront au cours de la description qui suit, faite en référence aux dessins annexés, dans lesquels :
- la figure 1 représente une vue schématique d'un équipement selon l'invention permettant l'obtention d'un produit sous forme de granules, particules ou billes surgelées riches en gaz dissous, à partir d'une matrice liquide, semi-liquide ou pâteuse ;
- la figure 2 montre une représentation schématique du principe de fonctionnement de l'équipement de la figure 1 ;
- la figure 3 représente une vue schématique du dispositif de mesure utilisé pour mesurer la quantité de gaz présente dans des billes de matrices obtenues selon différents essais.

### DESCRIPTION DETAILLEE DES FIGURES

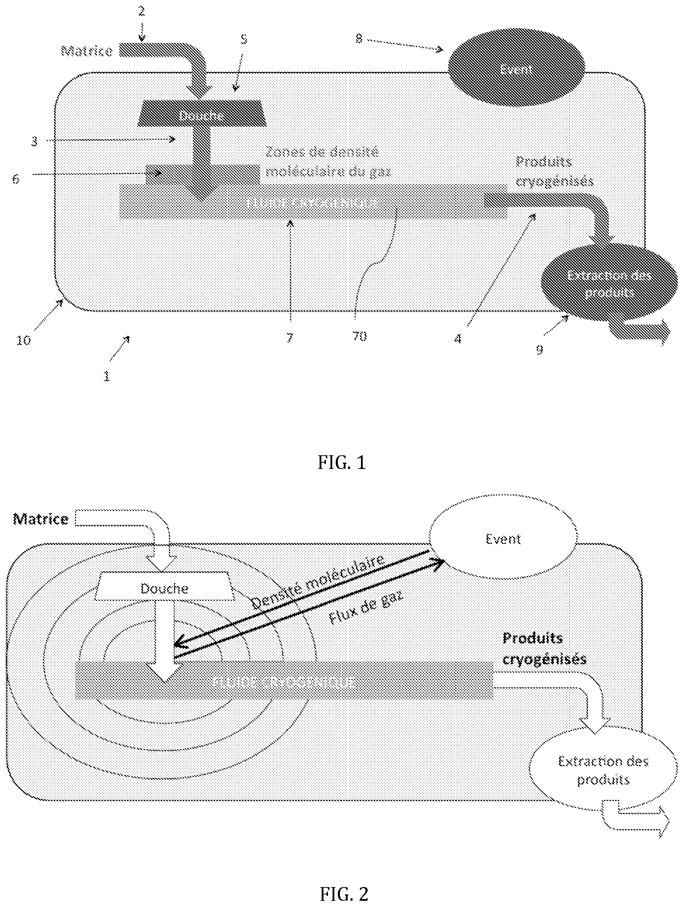

Les figures 1 et 2 représentent respectivement une vue schématique d'un équipement 1 et son principe de fonctionnement pour l'obtention d'un produit sous forme de granules, particules ou billes surgelées riches en gaz dissous, à partir d'une matrice liquide, semi-liquide ou pâteuse.

L'équipement 1 comprend des moyens 5 pour dispenser la matrice sous forme de gouttes 3, un réceptacle de cryogénisation 7 contenant un fluide cryogénique 70 et dans lequel les gouttes 3 de matrice sont reçues pour y être cryogénisées et transformées en granules, particules ou billes contenant le gaz dissous.

Le réceptacle de cryogénisation 7 est disposé sous les moyens 5 dispensant la matrice sous forme de gouttes de sorte que les gouttes 3 de matrice en sortie desdits moyens 5 tombent par gravité dans le réceptacle de cryogénisation 7.

L'équipement 1 comporte en outre une zone de haute densité moléculaire 6 de gaz située entre les moyens 5 dispensant la matrice sous forme de gouttes et le réceptacle de cryogénisation 7.

Les moyens 5 dispensant la matrice sous forme de gouttes, la zone de haute densité moléculaire 6 de gaz et le réceptacle de cryogénisation 7 sont disposés à l'intérieur d'une enceinte 10 fermée pourvue d'un évent 8 d'évacuation pour évacuer le gaz généré par l'évaporation du fluide cryogénique 70. Il peut bien entendu être prévu plusieurs évents d'évacuation de gaz sans sortir du cadre de l'invention. L'évent 8 est arrangé pour maintenir l'intérieur de l'enceinte 10 à une pression dans l'exemple décrit égale à la pression atmosphérique. L'évent 8 est arrangé pour permettre une évacuation du gaz par convection naturelle. Il peut être prévu cependant, pour des besoins particuliers, des moyens permettant de fermer l'évent pour mettre l'enceinte 10 sous pression.

L'équipement 1 comporte en outre un dispositif d'extraction 9 des granules, particules ou billes cryogénisées. Le dispositif d'extraction 9 est configuré pour maintenir l'étanchéité de l'enceinte 10, empêchant le gaz contenu dans l'enceinte 10 de s'échapper. Le dispositif d'extraction 9 peut être par exemple un système de sas ou de roue à auget, le sas ou les augets empêchant l'échappement de gaz autre que celui présent avec les billes ou granulés présents dans le sas ou les augets.

Le dispositif d'extraction 9 est raccordé à un dispositif de collecte (non représenté) situé à l'extérieur de l'enceinte 10.

La figure 2 présente un schéma de principe du fonctionnement de l'équipement selon l'invention. La matrice 2 à traiter s'écoule à travers une douche 5, de manière à former des gouttes 3 qui tombent dans le fluide cryogénique 70. Au cours de leur chute, les gouttes 3 traversent la zone de haute densité moléculaire 6 du gaz croissante, générée par l'ébullition du fluide cryogénique 70. Cette densité croissante permet une forte dissolution du gaz dans la matrice 2. En particulier, la dissolution maximale est atteinte au plus près du bain de fluide cryogénique 70, là où la densité moléculaire est la plus élevée. La zone de haute densité de gaz est créée dès lors que s'installe au sein de l'enceinte 10 un régime permanent, lequel est atteint du fait de la diffusion du gaz par convection naturelle vers l'extérieur de l'enceinte au travers seulement de l'évent 8. Le gradient de densité moléculaire appliqué aux gouttes de produits, influençant la quantité de gaz incorporée dans celles-ci, est lié au dimensionnement de l'enceinte elle-même, mais également à la pression qui s'établi dans l'enceinte.

Après un temps d'immersion dans le fluide cryogénique 70 suffisant pour que les gouttes 3 deviennent des billes entièrement solides, ces dernières sont extraites de l'enceinte 10 par un système dédié permettant de ne pas laisser le gaz s'échapper en continu dans la pièce où se situe la machine, du type sas composé par exemple de deux vannes qui ne sont pas ouvertes en même temps, ou une roue à auget.

Les granules, billes ou particules sont ensuite conditionnées dans un emballage, puis stockées à une température suffisante pour assurer que le produit reste solide, en fonction de sa température de fusion. La température de stockage peut ainsi varier de -18 à -80 degrés Celsius, en fonction de la composition initiale de la matrice. Par exemple, la plupart des matrices alimentaires peuvent être stockées à -18°C.

### ESSAIS COMPARATIFS

Sont présentés ci-après des essais réalisés selon différentes conditions de mise en oeuvre, l'essai 2 correspondant au procédé selon l'invention.

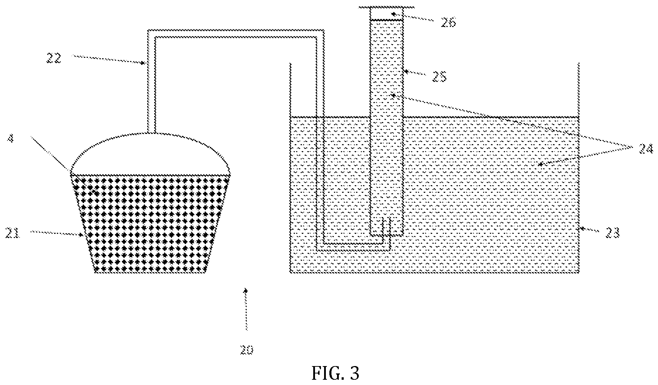

Essai 1 : Des billes d'eau cryogénisées sous pression sont réalisées selon le procédé décrit dans la demande WO2008/043909, sous une pression de 4 bars, dans un équipement 1 tel que décrit précédemment mais dont l'évent 8 a été fermé. L'enceinte 10 est ainsi entièrement fermée. L'opération d'incorporation de gaz est réalisée dans la matrice 2, avant le passage au travers de la douche, par mise en contact de ladite matrice 2 avec une atmosphère dont la pression partielle en gaz est également égale à 4 bars. Les billes sont stockées 48h dans un congélateur domestique, à une température de -18°C. La quantité de gaz présente dans les billes est alors mesurée à l'aide d'un dispositif 20 illustré sur la figure 3 et décrit ci-après. Pour ce faire, 200g de billes sont placés dans un premier récipient étanche 21. Un tuyau 22 avantageusement souple est connecté au récipient et est immergé dans un second récipient 23 contenant de l'eau 24, de telle sorte que des bulles s'échappant du tuyau remontent dans une éprouvette 25 graduée également remplie d'eau et disposée à l'envers. Lorsque les billes ont fini de fondre dans le premier récipient, le volume de gaz contenu initialement dans les billes correspond au volume de gaz 26 apparu dans l'éprouvette graduée.

Essai 2 : Des billes d'eau cryogénisées sont réalisées dans le même équipement 1 que précédemment, mais sans pression avec seulement l'évent 8 ouvert. A l'exception de l'évent 8, l'enceinte 10 est entièrement fermée. Lors du traitement, la pression observée dans l'enceinte 10 est bien de 0 bar. Les billes sont stockées 48h dans un congélateur domestique, à une température de -18°C. La quantité de gaz présente dans les billes est alors mesurée à l'aide du dispositif 20 de la figure 3.

Essai 3 : Des billes d'eau cryogénisées sont réalisées dans le même équipement 1 que précédemment, mais sans pression et sous aspiration d'air par l'évent 8 ouvert. A l'exception de l'évent 8, l'enceinte 10 est entièrement fermée. Les billes sont stockées 48h dans un congélateur domestique, à une température de -18°C. La quantité de gaz présente dans les billes est alors mesurée à l'aide du dispositif 20 de la figure 3.

Essai 4 : Des billes d'eau sont réalisées hors dispositif, par goutte à goutte à l'aide d'une seringue au-dessus d'un dewar rempli d'azote liquide. Les billes sont stockées 48h dans un congélateur domestique, à une température de -18°C. La quantité de gaz présente dans les billes est alors mesurée à l'aide du dispositif 20 illustré sur la figure 3.

Essai 5 : Des glaçons d'eau sont réalisés par congélation classique, en remplissant les alvéoles hémisphériques d'un moule avant de placer ce dernier au congélateur à -18°C. Après 48h, les billes sont démoulées et la quantité de gaz présente dans celles-ci est mesurée à l'aide du dispositif 20 illustré sur la figure 3.

Les résultats obtenus sont donnés dans le tableau 1 ci-après :

| Numéro d'essai | Volume de gaz mesuré (ml) | Pression équivalente (bars) |
|---|---|---|
| 1 | 16 | 3,5 |
| 2 | 6 | 1,5 |
| 3 | 0 | 0 |
| 4 | 0 | 0 |
| 5 | 0 | 0 |

On observe premièrement qu'aucun gaz n'est présent dans les produits lorsque ceux-ci sont préparés en dehors de tout équipement spécifique ou dans un équipement présentant une aspiration du gaz généré. En effet, les essais 3, 4 et 5 permettent bien d'obtenir des billes, mais celles-ci ne contiennent absolument aucun gaz dissous.

On observe également que le procédé selon la demande WO2008/043909 (incorporation de gaz sous une pression comprise entre 2 et 10 bars) permet bien d'obtenir des produits contenant du gaz dissous en grande quantité. En effet, l'essai 1 permet bien de mesurer une quantité de gaz importante, obtenue nécessairement par sursaturation du produit.

Enfin, on observe que le procédé tel que décrit dans la présente demande, correspondant à l'essai 2, permet également de dissoudre du gaz dans les produits, de telle sorte qu'une sursaturation est également observée. Dans cet exemple, la quantité de gaz observée à l'essai 2 est sensiblement inférieure à celle obtenue à l'essai 1. Ceci s'explique par les dimensions réduites du dispositif de traitement utilisé, qui ne permet de générer qu'un faible gradient de densité moléculaire de gaz et une dissolution limitée de ce dernier dans l'eau. On constate donc qu'en réalisant l'étape d'incorporation de gaz dans les gouttes 3 de matrice et non sur la matrice 2 et par simple application d'un gradient de densité moléculaire, une sursaturation des gouttes 3 est observées. La pression équivalente calculée dans le tableau 1 correspond à la pression à laquelle le produit aurait dû être soumis pour obtenir la dissolution de gaz mesurée. On calcule bien une pression de 3,5 bars pour le produit ayant été soumis à une pression de 4 bars (la dissolution n'a pas été totale mais elle est tout de même significative, de l'ordre de 88%). On calcule par ailleurs une pression équivalente de 1,5 bars pour le produit n'ayant été soumis à aucune pression, ce qui confirme bien l'existence d'une sursaturation sous l'effet de la haute densité moléculaire de gaz générée au-dessus du bain d'azote.

L'invention est décrite dans ce qui précède à titre d'exemple. Il est entendu que l'homme du métier est à même de réaliser différentes variantes de réalisation de l'invention sans pour autant sortir du cadre de l'invention.

## Revendications

1. Procédé d'obtention d'un produit sous forme de granules, particules ou billes surgelées riches en gaz dissous, à partir d'une matrice (2) liquide, semi-liquide ou pâteuse, comprenant les étapes consistant à gazéifier la matrice (2) par incorporation d'un gaz, à dispenser la matrice (2) sous forme de gouttes et cryogéniser les gouttes de matrice par immersion dans un fluide cryogénique (70), **caractérisé en ce que** l'étape de gazéification de la matrice (2) consiste à dissoudre en grande quantité le gaz généré par l'évaporation du fluide cryogénique dans les gouttes de matrice pour que le produit soit a minima saturé en ledit gaz, la dissolution étant réalisée par accroissement du nombre de molécules de gaz dans une zone de haute densité de gaz, dite zone de haute densité moléculaire, située au-dessus de la surface du fluide cryogénique et sur la trajectoire des gouttes de matrice avant leur immersion dans le fluide, ladite zone de haute densité moléculaire étant créée en réalisant la gazéification et la cryogénisation des gouttes gazéifiées au sein d'une enceinte fermée pourvue d'un évent (8) arrangé pour permettre une évacuation du gaz généré par l'évaporation du fluide cryogénique par convection naturelle et maintenir l'intérieur de l'enceinte à une pression supérieure ou égale à la pression atmosphérique.

2. Procédé selon la revendication 1, **caractérisé en ce que** les étapes de gazéification et de cryogénisation des gouttes gazéifiées sont réalisées dans une même enceinte fermée pourvue d'au moins un évent d'évacuation dimensionné pour permettre l'évacuation du gaz généré par l'évaporation du fluide cryogénique par convection naturelle.

3. Procédé selon l'une quelconque des revendications précédente, **caractérisé en ce qu'**il comporte une étape de collecte continue ou semi-continue des granules, particules ou billes sursaturées.

4. Equipement (1) pour l'obtention d'un produit sous forme de granules, particules ou billes surgelées riches en gaz dissous, à partir d'une matrice (2) liquide, semi-liquide ou pâteuse, comprenant des moyens pour dispenser la matrice (2) sous forme de gouttes et un réceptacle de cryogénisation (7) contenant un fluide cryogénique (70) dans lequel les gouttes de matrice sont reçues pour y être cryogénisées et transformées en granules, particules ou billes sursaturées, **caractérisé en ce que** l'équipement (1) comporte une zone de haute densité moléculaire (6) de gaz située entre les moyens dispensant la matrice (2) sous forme de gouttes et le réceptacle de cryogénisation (7), la zone de haute densité moléculaire (6) de gaz et le réceptacle de cryogénisation (7) étant situés à l'intérieur d'une enceinte (10) fermée pourvue d'au moins un évent (8) d'évacuation pour évacuer le gaz généré par l'évaporation du fluide cryogénique (70) par convection naturelle, l'évent (8) étant arrangé pour maintenir l'intérieur de l'enceinte (10) à une pression supérieure ou égale à la pression atmosphérique.

5. Equipement (1) selon la revendication 4, **caractérisé en ce que** le réceptacle de cryogénisation (7) est situé sous les moyens dispensant la matrice (2) sous forme de gouttes de manière à recevoir les gouttes (3) de matrice par écoulement gravitaire depuis les moyens dispensant la matrice (2) sous forme de gouttes jusque dans le réceptacle de cryogénisation (7).

6. Equipement (1) selon la revendication 4 ou la revendication 5, **caractérisé en ce que** les moyens dispensant la matrice (2) sous forme de gouttes sont situés à l'intérieur de l'enceinte (10).

7. Equipement (1) selon l'une quelconque des revendications 4 à 6, **caractérisé en ce qu'**il comporte un dispositif de collecte, en sortie du réceptacle de cryogénisation (7), des granules, particules ou billes.

## Patentansprüche

1. Verfahren zum Gewinnen eines Produkts in Form von tiefgefrorenen Körnchen, Partikeln oder Kügelchen, die reich an gelöstem Gas sind, aus einer flüssigen, halbflüssigen oder pastösen Matrix (2), umfassend die Schritte bestehend aus Vergasen der Matrix (2) durch Einbeziehen eines Gases, Abgeben der Matrix (2) in Form von Tropfen und Kryogenisieren der Tropfen der Matrix durch Eintauchen in ein kryogenes Fluid (70), **dadurch gekennzeichnet, dass** der Schritt der Vergasung der Matrix (2) aus dem Auflösen, in großen Mengen, des durch die Verdampfung des kryogenen Fluids erzeugten Gases in den Tropfen der Matrix besteht, so dass das Produkt zumindest mit dem genannten Gas gesättigt ist, wobei die Auflösung durch Erhöhen der Anzahl der Gasmoleküle in einer Zone mit hoher Gasdichte, die als Zone mit hoher Molekulardichte bezeichnet wird, die oberhalb der Oberfläche des kryogenen Fluids und auf dem Weg der Tropfen der Matrix vor ihrem Eintauchen in das Fluid befindlich ist, durchgeführt wird, wobei die Zone mit hoher Molekulardichte dadurch erzeugt wird, dass die Vergasung und Kryogenisierung der vergasten Tropfen innerhalb einer geschlossenen Kammer durchgeführt werden, die mit einer Öffnung (8) versehen ist, die angeordnet ist, um eine Evakuierung des durch die Verdampfung des kryogenen Fluids erzeugten Gases durch natürliche Konvektion zu ermöglichen, und um das Innere der Kammer auf einem Druck zu halten, der größer als oder gleich dem atmosphärischen Druck ist.

2. Verfahren nach Anspruch 1, **dadurch gekennzeichnet, dass** die Schritte der Vergasung und Kryogenisierung der vergasten Tropfen in ein und derselben geschlossenen Kammer durchgeführt werden, die mit mindestens einer Ablassöffnung versehen ist, die so dimensioniert ist, dass die Evakuierung des durch die Verdampfung des kryogenen Fluids erzeugten Gases durch natürliche Konvektion ermöglicht wird.

3. Verfahren nach einem der vorhergehenden Ansprüche, **dadurch gekennzeichnet, dass** es einen Schritt der kontinuierlichen oder halbkontinuierlichen Sammlung der übersättigten Körnchen, Partikel oder Kügelchen beinhaltet.

4. Ausrüstung (1) zum Gewinnen eines Produkts in Form von tiefgefrorenen Körnchen, Partikeln oder Kügelchen, die reich an gelöstem Gas sind, aus einer flüssigen, halbflüssigen oder pastösen Matrix (2), umfassend Mittel zum Abgeben der Matrix (2) in Form von Tropfen und einen Kryonik-Behälter (7), der ein kryogenes Fluid (70) enthält, in dem die Tropfen der Matrix aufgenommen werden, um dort kryogenisiert und in übersättigte Körnchen, Partikel oder Kügelchen umgewandelt zu werden, **dadurch gekennzeichnet, dass** die Ausrüstung (1) eine Zone (6) mit hoher Gasmolekulardichte beinhaltet, die zwischen den die Matrix (2) in Form von Tropfen abgebenden Mitteln und dem Kryonik-Behälter (7) befindlich ist, wobei die Zone (6) mit hoher Gasmolekulardichte und der Kryonik-Behälter (7) im Inneren einer geschlossenen Kammer (10) befindlich sind, die mit mindestens einer Ablassöffnung (8) zum Evakuieren des durch die Verdampfung des kryogenen Fluids (70) erzeugten Gases durch natürliche Konvektion versehen ist, wobei die Öffnung (8) angeordnet ist, um das Innere der Kammer (10) auf einem Druck zu halten, der größer als oder gleich dem atmosphärischen Druck ist.

5. Ausrüstung (1) nach Anspruch 4, **dadurch gekennzeichnet, dass** der Kryonik-Behälter (7) unter den die Matrix (2) in Form von Tropfen abgebenden Mitteln befindlich ist, um die Tropfen (3) der Matrix durch Schwerkraftfluss aus den die Matrix (2) in Form von Tropfen abgebenden Mitteln in den Kryonik-Behälter (7) aufzunehmen.

6. Ausrüstung (1) nach Anspruch 4 oder Anspruch 5, **dadurch gekennzeichnet, dass** die die Matrix (2) in Form von Tropfen abgebenden Mittel im Inneren der Kammer (10) befindlich sind.

7. Ausrüstung (1) nach einem der Ansprüche 4 bis 6, **dadurch gekennzeichnet, dass** sie eine Vorrichtung zum Sammeln der Körnchen, Partikel oder Kügelchen am Auslass des Kryonik-Behälters (7) beinhaltet.

## Claims

1. A method for obtaining a product in the form of deep-frozen, dissolved-gas-rich granules, particles or beads from a liquid, semi-liquid or pasty matrix (2) comprising the steps of gasifying the matrix (2) by incorporating a gas, dispensing the matrix (2) in the form of drops and cryogenizing the matrix drops by immersion in a cryogenic fluid (70), **characterized in that** the step of gasification of the matrix (2) consists in dissolving in large quantities the gas generated by the evaporation of the cryogenic fluid in the matrix drops so that the product is at least saturated with said gas, the dissolution being carried out by increasing the number of gas molecules in a zone of high gas density, called a high molecular density zone, located above the surface of the cryogenic fluid and on the path of the matrix drops before their immersion in the fluid, said high molecular density zone being created by carrying out the gasification and cryogenization of the gasified drops within a closed chamber provided with a vent (8) arranged to allow evacuation of the gas generated by the evaporation of the cryogenic fluid by natural convection and to keep the inside of the chamber at a pressure greater than or equal to atmospheric pressure.

2. The method according to claim 1, **characterized in that** the gasification and cryogenization steps of the gasified drops are carried out in the same closed chamber provided with at least one exhaust vent, sized to allow the evacuation of the gas generated by the evaporation of cryogenic fluid by natural convection.

3. The method according to any of the preceding claims, **characterized in that** it comprises a step of continuous or semi-continuous collection of the supersaturated granules, particles or beads.

4. Equipment (1) for obtaining a product in the form of deep-frozen, dissolved-gas-rich granules, particles or beads from a liquid, semi-liquid or pasty matrix (2), comprising means for dispensing the matrix (2) in the form of drops and a cryonics receptacle (7) containing a cryogenic fluid (70) in which the matrix drops are received in order to be cryogenized and transformed into supersaturated granules, particles or beads, **characterized in that** the equipment (1) comprises a high gas molecular density zone (6) located between the means for dispensing the matrix (2) in the form of drops and the cryonics receptacle (7), the high gas molecular density zone (6) and the cryonics receptacle (7) being located inside a closed chamber (10) provided with at least one exhaust vent (8) for evacuating the gas generated by the evaporation of the cryogenic fluid (70) by natural convection, the vent (8) being arranged to keep the inside of the chamber (10) at a pressure greater than or equal to atmospheric pressure.

5. Equipment (1) according to claim 4, **characterized in that** the cryonics receptacle (7) is located under the means for dispensing the matrix (2) in the form of drops so as to receive the matrix drops (3) by gravitational flow from the means for dispensing the matrix (2) in the form of drops into the cryonics receptacle (7).

6. Equipment (1) according to claim 4 or claim 5, **characterized in that** the means for dispensing the matrix (2) in the form of drops are located inside the chamber (10).

7. Equipment (1) according to any of claims 4 to 6, **characterized in that** it comprises a collection device of the granules, particles or beads at the outlet of the cryonics receptacle (7).
